# EUROPEAN PATENT SPECIFICATION

(11) **EP 0 835 192 B1**
(45) Date of publication and mention of the grant of the patent: **02.06.1999**
(21) Application number: 95904371.2
(22) Date of filing: 09.01.1995
(51) Int. Cl.: B60N 2/28

(54) **BABY COT FOR FIXING IN A VEHICLE EQUIPPED WITH SEAT-BELTS**
KINDERWAGEN ZUM BEFESTIGEN IN EINEM FAHRZEUG MIT SICHERHEITSGURTEN
LANDAU A FIXER DANS UN VEHICULE MUNI DE CEINTURES DE SECURITE

(30) Priority: 07.01.1994 BE 9400020
(43) Date of publication of application: 15.04.1998
(73) Proprietor: Leopold Tuytschaever & Co., 9800 Deinze (BE)
(72) Inventor: Ryndziewicz, Alex, B-9800 Deinze (BE)
(74) Representative: Powis de Tenbossche, Roland
(86) International application number: BE9500003
(87) International publication number: WO9518724

(56) References cited:
- AU-A- 6 064 980
- DE-A- 3 235 456
- DE-A- 3 345 588
- DE-C- 4 137 575
- FR-A- 2 651 467
- US-A- 4 583 253
- US-A- 5 005 234

## Description

### Field of the invention

This invention relates to a baby cot for placing on a seat of a vehicle equipped with at least one seat-belt, in particular a car (see for example, US-A-4 583 253, corresponding to the preamble of claim 1.)

### Prior art

The disadvantage of existing baby cots is that if the vehicle brakes suddenly and unexpectedly, or if there is a collision or an accident, the cot will be subjected to an abrupt and dangerous movement. If there is a baby in the basket, it will consequently be exposed to a great risk of injury through impact with some object in its path. Furthermore, an empty baby cot can also endanger or obstruct the driver or a passenger in the event of sudden braking or an accident. Consequently, such a baby cot is not safe at all during driving.

Originally, an ordinary, unreinforced cot was placed in a frame made specially for this purpose. The frame was fixed in the car by means of a set of belts specially designed for this purpose. This set of belts had to be fixed in the car, and thus remained permanently in the car.

The cot was fixed by means of two belts which had been attached at the top of the frame. Fitting this system was time-consuming and expensive.

Subsequently, the frame was dispensed with and replaced by a reinforced pram cot, over which a net was stretched, in order to prevent the baby from being flung out of the cot in the event of an accident. The cot was in turn itself fixed in the car by means of special belts, with the same disadvantages as the system described above.

There are now baby cots which can be fixed to the seat of the vehicle by means of external, loose fastening means, such as loose cords, loose belts and the like. A disadvantage of this is that the user himself has to fasten these loose fastening means in order to ensure a safer connection between the baby cot and the seat of the vehicle. There is a risk of this not being carried out properly, with the result that the baby placed in the cot remains exposed to great risks. This means that the safety problem remains.

A further disadvantage in this case is that having to place the fastening means oneself in each case is not very user-friendly.

Another factor is that if another user wishes to fix the same baby cot already used by the earlier user in another vehicle of his own, said other user has to detach the fastening means used earlier from the earlier vehicle and then refit them in the other vehicle, or said other user has to purchase another set of loose fastening means of his own for fitting in the other vehicle.

### SUMMARY OF THE INVENTION

The object of the present invention is to overcome the abovementioned disadvantages. To that end, the baby cot according to the invention, has the features set forth in claim 1. The baby cot comprises a frame with a bottom which has a longitudinal axis and is provided with at least one fixing means for detachably fixing the baby cot to the seat. This is achieved by inserting one of the standard fitted seat-belts of the vehicle into the fixing means. At least one cot belt is preferably provided with a corresponding fixing means in each case, connected to the frame by way of the cot belt to which it corresponds. The presence of fixing means already fitted beforehand and/or cot belts on the baby cot itself means that there is no chance of the user making the wrong fastening. This means that fully controlled safety is also obtained, since the risk of poor positioning is eliminated. An additional advantage of the baby cot according to the invention is that excellent user-friendliness is obtained. Moreover, another user will also benefit from the fact that he will not have to disconnect a set of belts used earlier, and that he will not have to buy a further set of belts. Additional storage space is also saved, in particular in the boot of the car, since no additional attachment belts are required. One's own fixing means, on the one hand, provide a reliable connection with standard fitted seat-belts already existing in the vehicle, on the other.

Further embodiments of the baby cot according to the invention are described in the sub-claims. Other advantages and special features will be explained with reference to the description below of a number of exemplary embodiments illustrated by the appended drawings.

### BRIEF DESCRIPTION OF THE DRAWINGS

Figure 1 is a general view of a baby cot placed on the pram to which it belongs.
Figure 2 is a perspective view of the baby cot according to the invention.
Figure 3 is a diagrammatic view of the frame of the baby cot with its own fixing means according to the invention.
Figure 4 is a diagrammatic view of an empty baby cot in a first arrangement.
Figure 5 is a similar view to that of Figure 4, with a baby placed in the cot.
Figure 6 represents a further sketched arrangement of the baby cot according to the invention.

### DESCRIPTION OF THE INVENTION

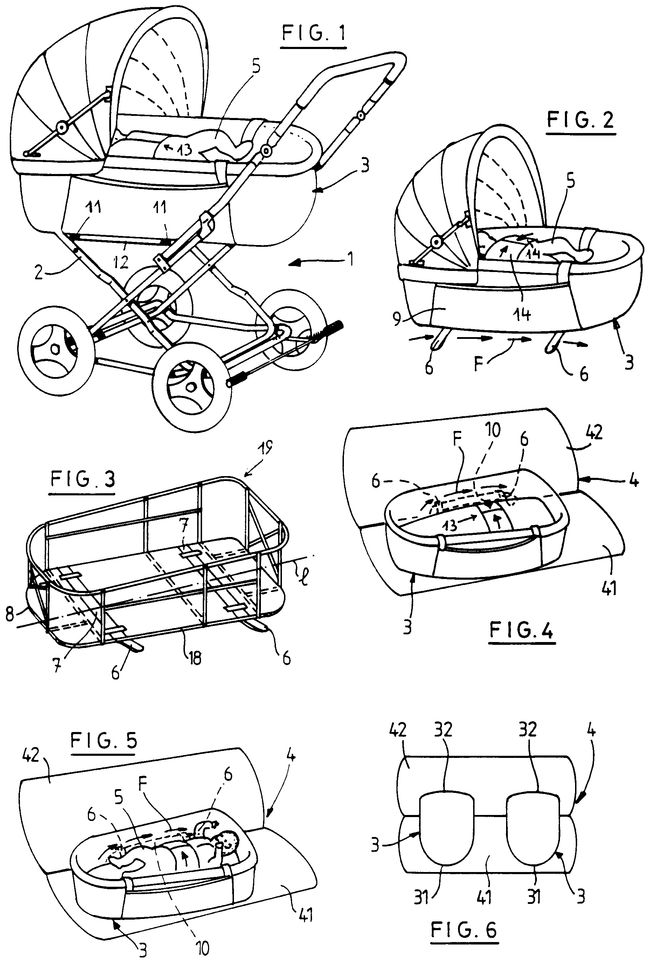

Figure 1 shows a general view of a complete pram 1, which has a steerable frame 2 on which a baby cot 3 is placed. In this case the baby cot 3 is fixed detachably on the frame 2, e.g. by means of clip-on coupling means 11 which can be clipped on around longitudinal bars 12 of the bearing part of the frame. The baby cot 3 is thus easily removed from the frame 2 and placed in a vehicle. This means that when a baby 5 is being transported, said baby 5 can be transferred directly to a seat 4 of a vehicle, in particular a car, without having to change to another cot 3.

Systems allowing the baby cot or carry-cot 3 to be fixed exist already, but this fixing is only by means of supplementary belts: either directly on the carry-cot itself or by means of a metal frame in which or on which the carry-cot is situated. A disadvantage of such existing systems is that the user himself has to place this supplementary belt in his boot, which means that this system is not user-friendly.

Moreover, in this case the user could fix the supplementary belts incorrectly. Furthermore, once the supplementary belts have been placed, another user with another car will either have to disconnect these belts from the earlier car and fit them in his own car, or will have to buy a second set of supplementary belts and place them in his car.

According to the invention, the baby cot 3 is equipped with fixing means 6, for example in the form of fixing loops of the type shown in Figure 2. Inserting a car seat-belt 10, which is already a standard fitting in the car, in the direction of arrow F in Figure 2 produces an extremely safe fixing of the baby cot 3 to the car seat 4. A very satisfactory solution to the existing safety problem is given in this way.

Thanks to the provision of the abovementioned fixing loops 6, the user-friendliness of the whole arrangement is also increased through its simplicity, which advantageously encourages the user actually to use the available safety system.

Providing the fixing loops 6 on the bottom edge 18 of the baby cot considerably increases the stability of the baby cot fixed against the car seat 4, through the fact that the distance between fixing means 6, on the one hand, and fixing face formed by the seating surface 41 of the seat 4, on the other, is reduced to a minimum, so that virtually no lever effect any longer occurs.

Figure 3 also shows the frame of the baby cot 3, along the bottom 8 of which a pair of cot belts 7 are disposed. The latter extend in a certain direction relative to the longitudinal axis ℓ of the carry-cot 3 for example virtually at right angles thereto, as shown in the figure.

In this case the fixing loops 6 are in the form of a continuation of the cot belts 7. Figure 2 thus shows how the cot belts 7 extend along one of the longitudinal sides of the baby cot, through the upholstery 9 with which said baby cot 3 is covered, and up to the fixing loops 6.

This crosswise arrangement of the cot belts 7 and of the fixing loops 6 connecting thereto is suitable for an arrangement lengthwise relative to the seat 4, as shown in Figures 4 and 5. Fitting at least two fixing loops 6 on one of the longitudinal sides of the baby cot increases the fixing stability of the baby cot. These loops 6 are fixed on the bottom of the baby cot or carry-cot 3, so that the carry-cot with the available two-point belt or lap belt can be fixed on the seat 4.

A set of fixing loops 6 can also be provided on both longitudinal sides of the baby cot. This makes it possible to select the direction in which the baby cot 3 is placed relative to the seat 4, so that account can be taken here of external factors such as shade for the baby, avoiding dazzle from the sun, the safest position for the baby, and the like. The best comfort can be offered to the baby in this way.

The actual fixing method is shown in Figures 4 and 5. The baby cot 3 is first placed on the seating surface 41, virtually against the backrest 42 of the car seat 4, with one of the longitudinal sides, which is provided with fixing loops 6, facing the backrest 42. The baby cot 3 is placed in a suitable manner in order to ensure good positioning relative to the car seat-belts 10 already fitted in the car and shown by dashed lines, and in order to ensure that there are fixing points for it. The seat-belt 10, in particular the lap belt, fitted as standard in the car, is then inserted through the fixing loops 6 in the direction of the arrow F, in the illustrated example of the rear seat 4 of the car.

Figure 6 shows another arrangement for the baby cot, namely crosswise to the seat 4. For this purpose, an adapted arrangement of cot belt and fixing loops is required, namely along the longitudinal axis ℓ of the baby cot. In this case at least one transverse side 31, 32 of the bottom edge 18 is provided with at least one fixing loop. In most cases the length of the baby cot is greater in this case than the transverse measurement of the seating surface 41 of the seat 4. For the transverse fitting arrangement of a baby cot shown in Figure 6, it may consequently be necessary to fold down the backrest 42 of the seat in such a way that the baby cot thus placed can lie in a flat plane. As can be seen from Figure 6, this arrangement makes it possible for several baby cots to be placed next to one another on the rear seat 4 of the car, in particular one per fitted seat-belt.

It is also possible to make the fixing loops 6 integral with the frame 8 of the baby cot. A fairly simple method of production of an extremely safe baby cot is obtained in this way, and this also constitutes a particularly hard-wearing design.

The fixing loops 6 can also be made such that they can be tightened by means of the cot belts 7, in order to allow the taking up of any play relative to the inserted car seat-belts 10.

It is also advantageous to provide a flexible anti-crash belt 13, by means of which the baby 5 can be belted in and held safely in the carry-cot 3. The protective belt 13 consists of, for example, two flaps 14 which are placed opposite each other and can be folded against each other and joined together by a zip-fastener, or preferably by a Velcro strip. This provides an adjustable protective belt which can be adapted perfectly to the baby, so that his safety is further improved. Both flaps 14 are advantageously provided in such a way that they virtually overlap completely when the carry-cot 3 is empty, so that an ample adjustment facility is obtained, in addition to a greater contact surface between the two flaps 14 in the working state when a baby is present in the carry-cot.

## Claims

1. Baby cot for placing on a seat of a vehicle equipped with scat-belts (10), in particular a car, in which said cot (3) is provided with at least one fixing means (6) for detachably fixing the baby cot (3) to the seat (4) through inserting the existing seat-belt (10) into said at least one fixing means (6), characterised in that said baby cot (3) comprises a frame (19) having a bottom with a longitudinal axis (ℓ), further comprising upstanding walls around the edge (18) of said bottom extending substantially from said bottom, said cot (3) having no additional cot belts, and in that an anti-crash strip (13) is provided to be fitted on the baby (5).

2. Baby cot according to the preceding claim, characterised in that said protective strip (13) is adjustable on the baby (5).

3. Baby cot according to Claims 1 or 2, characterised in that said anti-crash strip (13) comprises two flaps (14) and some fastening means, which flaps (14) are arranged opposite each other so as to be foldable against each other and securable together by said fastening means.

4. Baby cot according to the preceding Claim, characterised in that said fastening means are formed by a Velcro tape.

5. Baby cot according to Claim 3, characterised in that said fastening means are formed by a zip-fastener.

6. Baby cot according to one of the preceding Claims, characterised in that said fixing means is formed by a fixing loop (6) which is provided on the bottom edge (18) of the baby cot (3).

7. Baby cot according to one of the preceding Claims, characterised in that said cot (3) is provided with at least one cot strap (7), said at least one fixing loop (6) being connected to the frame (19) by means of said cot strap (7).

8. Baby cot according to the preceding claim, characterised in that each cot strap (7) extends between two opposite sides of the bottom edge (18) of the baby cot (3) along the abovementioned edge (18) and is provided with said fixing loop (6) on at least one of said sides.

9. Baby cot according to one of Claims 7 or 8, characterised in that each abovementioned cot strap (7) is fitted substantially at right angles to the longitudinal axis (ℓ) of the baby cot.

10. Baby cot according to the preceding claim, characterised in that at least two parallel cot strap (7) are provided, which strap are each provided with a fixing loop (6) on at least the same longitudinal side of the bottom edge (18).

11. Baby cot according to Claim 7, characterised in that said cot strap is provided substantially along the longitudinal axis (ℓ) of the baby cot, while at least one of the transverse sides of the bottom edge (18) is provided with a fixing loop (6).

12. Baby cot according to one of the preceding claims, characterised in that each fixing loop (6) is integral with the frame (19) of the baby cot.

13. Pram provided with a baby cot as claimed in one of the preceding Claims, characterised in that said cot is further provided with coupling means (11) for fitting thereof on the pram (1), wherein the baby cot (3) is arranged to be fitted detachably on the chassis (2) of the pram (1) with said coupling means (11).

14. Pram according to claim 13, characterised in that said coupling means (11) are formed by clipping means which are arranged to be clipped onto the chassis (2) of the pram (1).

## Patentansprüche

1. Kinderbettchen zum Aufsetzen auf einen Sitz eines Fahrzeugs, das mit Sitzgurten (10) ausgestattet ist, insbesondere in einem Auto, in dem das Kinderbettchen (3) mit mindestens einer Halterungseinrichtung (6) zur lösbaren Befestigung des Kinderbettchens (3) am Sitz (4) durch Einschieben des vorhandenen Sitzgurtes (10) in mindestens eine Halterungseinrichtung (6) versehen ist,
dadurch gekennzeichnet,
daß das Kinderbettchen (3) einen Rahmen (19) umfaßt, der einen Boden mit einer Längsachse (1) aufweist, und der des weiteren um die Kante (18) des Bodens herum aufrechte Wände umfaßt, die sich im wesentlichen vom Boden erstrecken, wobei das Kinderbettchen (3) keine zusätzlichen Bettchenriemen aufweist, und daß ein Sicherheitsgurt (13) vorgesehen ist, der am Kind (5) befestigt wird.

2. Kinderbettchen nach dem vorhergehenden Anspruch, dadurch gekennzeichnet, daß der Sicherheitsgurt (13) am Kind (5) einstellbar ist.

3. Kinderbettchen nach Anspruch 1 oder 2, dadurch gekennzeichnet,daß der Sicherheitsgurt (13) zwei Verschlußklappen (14) und einige Befestigungseinrichtungen aufweist, wobei die Verschlußklappen (14) einander gegenüber angeordnet sind, so daß sie gegeneinander gelegt und durch die Befestigungseinrichtung miteinander befestigt werden können.

4. Kinderbettchen nach dem vorhergehenden Anspruch, dadurch gekennzeichnet,daß die Befestigungseinrichtung durch einen Klettverschluß gebildet ist.

5. Kinderbettchen nach Anspruch 3, dadurch gekennzeichnet,daß die Befestigungseinrichtung durch einen Reißverschluß gebildet ist.

6. Kinderbettchen nach einem der vorhergehenden Ansprüche, dadurch gekennzeichnet, daß die Halterungseinrichtung eine Halterungsschleife (6) darstellt, die an der Bodenkante (18) des Kinderbettchens (3) vorgesehen ist.

7. Kinderbettchen nach einem der vorhergehenden Ansprüche, dadurch gekennzeichnet, daß das Bettchen (3) mit mindestens einem Binderiemen (7) ausgestattet ist, wobei die mindestens eine Halterungsschleife (6) mit Hilfe des Bettchen-Binderiemens (7) mit dem Rahmen (19) verbunden ist.

8. Kinderbettchen nach einem der vorhergehenden Ansprüche, dadurch gekennzeichnet, daß sich jeder Bettchen-Binderiemen (7) zwischen zwei einander gegenüberliegenden Seiten der Bodenkante (18) des Kinderbettchens (3) entlang der oben angegebenen Kante (18) erstreckt und an mindestens einer der Seiten mit dar Halterungsschleife (6) versehen ist.

9. Kinderbettchen nach einem der Ansprüche 7 oder 8, dadurch gekennzeichnet, daß jeder Bettchen-Binderiemen (7) im wesentlichen im rechten Winkel, bezogen auf die Längsachse (1) des Kinderbettchens befestigt ist

10. Kinderbettchen nach dem vorhergehenden Anspruch, dadurch gekennzeichnet, daß mindestens zwei parallele Bettchen-Binderiemen (7) vorgesehen sind, wobei jeder Binderiemen an mindestens der gleichen Längsseite der Bodenkante (18) mit einer Halterungsschleife (6) versehen ist.

11. Kinderbettchen nach Anspruch 7, dadurch gekennzeichnet, daß der Bettchen-Binderiemen (7) im wesentlichen entlang der Längsachse (1) des Kinderbettchens vorgesehen ist, während mindestens eine der Querseiten der Bodenkante (18) mit einer Halterungsschleife (6) versehen ist.

12. Kinderbettchen nach einem der vorhergehenden Ansprüche, dadurch gekennzeichnet, daß jede Halterungsschleife (6) mit dem Rahmen (19) des Kinderbettchens einstückig ausgeführt ist.

13. Kinderwagen, der mit einem Kinderbettchen nach einem der vorhergehenden Ansprüche ausgestattet ist, dadurch gekennzeichnet, daß das Bettchen für seine Befestigung auf dem Kinderwagen (1) ferner mit einer Kopplungseinrichtung (11) ausgestattet ist, wobei das Kinderbettchen (3) so angeordnet ist, daß es mit der Kopplungseinrichtung (11) lösbar am Chassis (2) des Kinderwagens (1) befestigt ist.

14. Kinderwagen nach Anspruch 13, dadurch gekennzeichnet, daß die Kopplungseinrichtung (11) durch Klemmeinrichtungen gebildet ist, die so angeordnet sind, daß sie auf dem Chassis (2) des Kinderwagens festgeklemmt werden.

## Revendications

1. Nacelle à placer sur un siège d'un véhicule muni de ceintures de sécurité (10) en particulier une voiture, la nacelle précitée (3) étant pourvue d'au moins un moyen de fixation (6) pour fixer la nacelle (3) ou siège (4) de façon détachable par l'insertion de la ceinture de sécutité (10) existante dans le ou les moyen(s) de fixation précité(s) (6), caractérisée en ce que la nacelle précitée (3) comprend un cadre (19) possédant un fond avec un axe longitudinal (1), comprenant en outre une paroi droite autour du bord (18) dudit fond s'éténdant sensiblement à partir dudit fond, la nacelle (3) ne présentant pas de ceintures de nacelle suppléméntaires, et en ce que une bande de protection (13) est prévue pour être adaptéé au bébé (5).

2. Nacelle suivant la revendication précédente, caractérisée en ce que ladite bande de protection (13) est ajustable au bébé (5).

3. Nacelle suivant la revendication 1 ou 2, caractérisée en ce que ladite bande de protection (13) comprend deux rabats (14) et des moyens de fermeture, les rabats (14) étant agencés de façon mutuellement opposée de manière à pouvoir être repliés l'un contre l'autre et à pouvoir être rattachés ensemble par les moyens de fermeture précités.

4. Nacelle suivant la revendication précédente, caractérisée en ce que lesdits moyens de fermeture sont formés par une bande Velcro.

5. Nacelle suivant la revendication 3, caractérisée en ce que lesdits moyens de fermeture sont formée par une fermeture éclair.

6. Nacelle suivant l'une des revendications précédentes, caractérisée en ce que le moyen de fixation précité est formé par une boucle de fixation (8) qui est prévue sur le bord inférieur (18) de la nacelle (3).

7. Nacelle suivant l'une des revendications précédentes, caractérisée en ce que la nacelle (3) eut pourvue d'au moins une sangle de nacelle (7), le au les boucles de fixation précité (6) étant attachés au cadre (19) ou moyen de ladite sangle de nacelle (7).

8. Nacelle suivant la revendication précédente, carctérisée en ce que chaque sangle de nacelle (7) s'étend entre deux côtes opposés du bord de fond (18) de la nacelle (3) le long du bord précité (18) et est pourvue de la boucle de fixation (6) précitée sur au moins l'un desdits côtés.

9. Nacelle suivant l'une des revendications 7 ou 8, caractérisée en ce que chaque sangle de nacelle précitée (7) est adaptée sensiblement à angle droit par rapport à l'axe longitudinal (1) de la nacelle.

10. Nacelle suivant la revendication précédente, caractérisée en ce que au moins deux sangles de nacelle parallèles (7) sont prévues, les sangles étant chacune pourvues d'une boucle de fixation (6) sur au moins le même côté longitudinal du bord de fond (18).

11. Nacelle suivant la reendication 7, caractérisée en ce que ladite sangle de nacelle est prévue sensiblement le long de l'axe longitudinal (1) de la nacelle, tandis qu'au moins l'un des côtés transversaux du bord de fond (18) est pourvu d'une boucle de fixation (6).

12. Nacelle suivant l'une des revendications précédentes, caractérisée en ce que chaque boucle de fixation (6) est d'une pièce avec le cadre (19) de la nacelle.

13. Landau pourvu d'une nacelle pour bébé telle que revendiquée dans l'une des revendications précédentes, caractérisé en ce que ladite nacelle est pourvue en outre de moyens d'assemblage (11) pour monter celle-ci sur le landau (1), la nacelle pour bébé (3) étant agencée pour être montée de façon amovible sur le châssis (2) du landau (1) avec lesdits moyens d'assemblage (11).

14. Landau suivant la revendication 13, caractérisé en ce que lesdits moyens d'assemblage (11) sont formés par des moyens de clipsage qui sont agencés pour être clipsés sur le chässis (2) du landau (1).
